# EUROPEAN PATENT APPLICATION

(11) **EP 2 592 866 A1**
(43) Date of publication of application: **15.05.2013**
(21) Application number: 12191960.9
(22) Date of filing: 09.11.2012
(51) Int. Cl.: H04W 36/00

(54) **Method and apparatus for updating an "active set" for a device**

(30) Priority: 11.11.2011 US 201161558683 P
(71) Applicant: Research In Motion Limited, Waterloo, ON N2L 3W8 (CA)
(72) Inventor: Farnsworth, Andrew John, Birmingham, West Midlands B1 2RA (GB); Vijai, Anup, Birmingham, West Midlands B1 2RA (GB); Rangaiah, Raghavendra Magadi, Birmingham, West Midlands B1 2RA (GB); Singh, Vaibhav, Birmingham, West Midlands B1 2RA (GB)
(74) Representative: Bryn-Jacobsen, Caelia

(57) **Abstract**

A method and apparatus for wireless communication device is disclosed, including approaches to handling Active Set Update messages.

## Description

### BACKGROUND

### TECHNICAL FIELD

This application relates to mobile telecommunications systems in general, and in particular a method and apparatus of wireless communication for a device.

### DESCRIPTION OF THE RELATED ART

In a typical cellular radio system, mobile user equipment (UE) communicates via a radio access network (RAN) to a core network. User equipment (UE) comprises various types of equipment such as mobile telephones (also known as cellular or cell phones), lap tops with wireless communication capability, personal digital assistants (PDAs) etc. These may be portable, hand held, pocket sized, installed in a vehicle etc and communicate voice and/or data signals with the radio access network.

A radio access network covers a geographical area typically divided into a plurality of cell areas. Each cell area is served by at least one base station, which in UMTS may be referred to as a Node B. Each cell is typically identified by a unique identifier which is broadcast in the cell. The base stations communicate at radio frequencies over an air interface with the UEs within range of the base station. Several base stations may be connected to a radio network controller (RNC) which controls various activities of the base Stations. The radio Network controllers are typically connected to a core network.

UMTS is a third generation public land mobile telecommunication system. Various standardization bodies are known to publish and set standards for third generation public land mobile telecommunication systems, each in their respective areas of competence. For instance, the 3GPP (Third Generation Partnership Project) in addition to publishing and setting standards for UMTS, also publishes and sets standards GSM (Global System for Mobile Communications) 3GPP2 (Third Generation Partnership Project 2) publishes and sets standards for CDMA (Code Division Multiple Access).

The 3GPP Technical Specification 25.331, release 10 addresses some aspects of UMTS RRC (Radio Resource Control) protocol requirements between the UMTS Terrestrial Radio Access Network (UTRAN) and the mobile user equipment (UE). More particularly, 3GPP Technical Specification 25.331 v.10.4.0 clause 8.3.4.3 relates to reception of an active set Update message by a UE. The specifications are referred to herein as the "Standard", and are incorporated herein by reference.

### BRIEF DESCRIPTION OF THE DRAWINGS

Embodiments will now be described, by way of example only, with reference to the attached drawings, in which:

Fig. 1 is a diagram capturing the current 3GPP standardised UE behaviour as described therein;

Fig. 2 is a diagram capturing the current 3GPP standardised UE behaviour as described therein;

Fig. 3 is a diagram capturing the current 3GPP standardised UE behaviour as described therein;

Fig. 4 is a diagram capturing the current 3GPP standardised UE behaviour as described therein;

Fig. 5 is a diagram capturing the current 3GPP standardised UE behaviour as described therein;

Fig. 6 is a diagram capturing the current 3GPP standardised UE behaviour as described therein;

Fig. 7 is a diagram capturing the current 3GPP standardised UE behaviour as described therein;

Fig. 8 is a flow diagram illustrating steps performed according to an aspect of the approach described herein;

Fig. 9 is a flow diagram illustrating steps performed according to an aspect of the approach described herein;

Fig. 10 is a flow diagram illustrating steps performed according an aspect of the approach described herein;

Fig. 11 is a flow diagram illustrating steps performed according an aspect of the approach described herein;

Fig. 12 shows an overview of a network and a UE device;

Fig. 13 is a block diagram illustrating an embodiment of a protocol stack provided in a UE device; and

Fig. 14 is a block diagram illustrating a UE device.

The same reference numerals are used in different Figures to denote similar elements.

### DETAILED DESCRIPTION OF THE DRAWINGS

A method and apparatus of wireless communication is described herein. In the following description, for the purposes of explanation, numerous specific details are set forth in order to provide a thorough understanding of the new, inventive, and non-obvious concepts disclosed herein (hereinafter "concepts" or "concept"). It will be apparent, however, to one skilled in the art that the technique may be practised without these specific details. In other instances, well-known structures and devices are shown in block diagram form in order to avoid unnecessarily obscuring the concepts disclosed herein.

The needs identified in the foregoing Background, and other needs and objects that will become apparent from the following description, are achieved by, in one aspect, a method and apparatus of wireless communication.

In one aspect, there is provided a method of wireless communication for a device, the method comprising, at the device receiving an AS Update message, and if the message is received in response to a message from the device, and upon a possible reduction in reception quality if the AS Update message were applied by the device; not applying the AS Update message.

Preferably, there is a possible reduction comprises an anticipated or expected reduction in reception quality. Preferably, not applying the AS Update message comprises: not applying the AS Update message to an AS of cells for the device for a predetermined period of time after receipt of the AS Update message; rejecting the AS Update message; or rejecting the AS Update message and sending an AS Update Failure Message.

The method preferably further includes sending a measurement report message responsive to a first cell in an AS for the device becoming weak relative to other cells in the AS; storing an indication of the measurement report message in a first variable; and determining the AS Update message is received in response to a message from the device if the indication is stored.

Preferably, the indication comprises an identification of a radio link or an identification of the cell for the first cell. The method may further include responsive to a radio link for a cell being removed from the AS, removing the indication from the first variable.

The method preferably further includes removing the indication from the first variable a predetermined time after storage in the variable. Preferably, a possible reduction in reception quality may be dependent upon there being: no current measurements by the device relating to a cell not in an AS of the device becoming better quality relative to a cell in the AS; and the AS Update message comprising a radio link to remove from the AS, where the device previously sent a message related to the removal of that radio link and measurements of that radio link after receipt of the Active Set Update message do not satisfy conditions that would give rise to the device sending a message related to the radio link removal.

The method may further include sending an AS Update Failure Message to a network comprising a Universal Mobile Telecommunications System UMTS Terrestrial Radio Access Network UTRAN in which the device is operable.

Preferably the method comprises not applying the AS Update message comprises sending an AS Update Failure Message to the UTRAN; and further including monitoring the UTRAN's response to the AS Update Failure Message comprising monitoring whether there is a radio link failure RLF for the device and/or whether an RRC Connection Release Message is received.

Preferably, in which responsive to a number of RLFs and/or RRC Connection Release Messages exceeding a threshold within a predetermined period of time after sending of the AS Update Failure Message: updating an AS for the device responsive to a subsequently received AS Update message.

The method may further include monitoring the UTRAN's response to the AS Update Failure Message comprising determining whether the UTRAN updates a UTRAN AS.

Preferably the device is associated with operation on a plurality of cells; and preferably wherein the operation is on a plurality of different frequencies; and preferably where there is an active set for each cell on each of said frequencies for downlink, and/or in uplink transmission.

Preferably, when not applying the AS Update message, the method further comprises sending a message including an indication indicating a cause for not applying the AS Update message.

There is also provided a method of wireless communication for a device, the method comprising, at the device: receiving an AS Update message, and depending upon whether the message includes an indication relating to whether to apply or not apply the AS Update message dependent upon reception quality, and whether when an AS-type indication is included, the message fulfils a criteria defined by the indication; and upon a possible reduction in reception quality if the AS Update message were applied by the device; not applying the AS Update message.

Preferably in which the indication comprises an information element included in the AS Update message; and preferably wherein the criteria relates to whether the message is received in response to a message from the device.

There is also provided a wireless telecommunications device comprising a component configured to: receive an AS Update message, and if the message is received in response to a message from the device, and upon a possible reduction in reception quality if the AS Update message were applied by the device; not apply the AS Update message.

There is also provided a wireless telecommunications device comprising a component configured to: receive an AS Update message, and depending upon whether the message includes an indication relating to whether to apply or not apply the AS Update message dependent upon reception quality, and whether when an AS-type indication is included the message fulfils a criteria defined by the indication; and upon a possible reduction in reception quality if the AS Update message were applied by the device; not applying the AS Update message.

Preferably, the device comprises a component further configured to carry out that there is in one aspect a data carrier carrying data comprising instructions executable by processing means to cause those means to carry out a method according described herein.

In another aspect, there is a computer readable medium having computer executable instructions adapted to cause the device to perform a method described herein.

In other aspects, the concept encompasses a wireless telecommunication device and a computer-readable medium configured to carry out the foregoing actions, as well as a data carrier carrying thereon or therein data indicative of instructions executable by processing means to cause those means to carry out the foregoing actions. Examples are CD-ROMs, memory sticks, dongles, transmitted signals, downloaded files etc. In particular, the method may be implemented in a mobile telecommunications device, with or without voice capabilities, or other electronic devices such as handheld or portable devices.

An overview is now given of existing problems and how they are addressed according to the approaches described below. In the Figures, like reference numerals denote like components/messages and are not described unless repetition is required.

This invention can be applied to any mobile cellular radio communications systems including (but not limited to) existing and future 3GPP technologies (e.g. UMTS). This applies to any systems, Radio Access Technologies (RATs) or modes where a device (also called MS, ME or UE) is simultaneously connected to two or more cells (or cell sectors) during a call (aka network controlled soft handover).

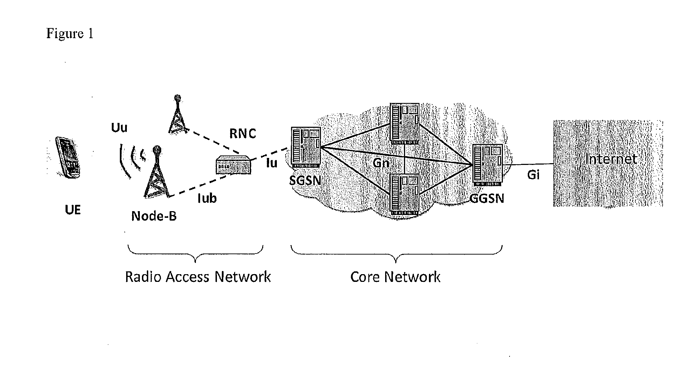

Mobile networks are often segmented into i) a core network component and ii) a radio access network component as shown in the Examples of Figure 1 (for UMTS). The core network may be connected to the radio access network and is further connected to an external data network such as the public internet.

During normal operation, mobile devices typically form a long-term attachment with the core network (CN) by means of establishing a user context within one or more core network nodes. The user context is used by the core network to route inbound/outbound packets between a gateway CN node and a serving CN node to which the user is attached.

During the time in which the user (UE) is attached to the CN, connectivity between the CN and the RAN, and between the RAN and the UE may be noncontinuous in order to save power and resources during periods of lower data activity. A Radio Resource Control (RRC) layer (L3) resident within a RAN node (such as the Radio Network Controller - RNC - for UMTS), is often used to control the level of connectivity provided between the UE and the RAN, and between the RAN and the CN.

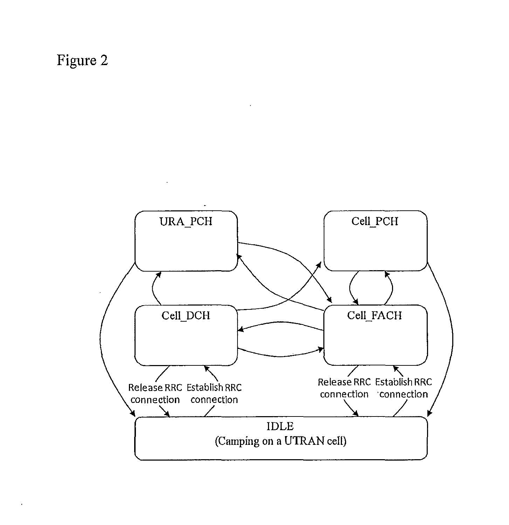

In the UMTS system, 5 RRC states are defined as shown in Figure 2. Four of these are categorised as "RRC Connected" in which a RRC context is established between the RAN and the UE for the device. The remaining state (IDLE) is not RRC connected.

The five UMTS RRC states are listed below in order of a decreasing level of connectivity:

Cell_DCH state (RRC Connected mode): In this state, full user-plane connectivity is usually established between the mobile and the core network (through the radio access network). All associated bearers are established between the mobile and the plurality of involved network nodes within the connection path (e.g. Uu, Iub, Iu, Gn, Gi interfaces). The user has near-immediate access to dedicated or shared radio resources. The location of the device is known to the Active Set cell level by the radio access network (RAN), and the RAN is in control of cell-level mobility (known as network-controlled handover). Device power consumption in this state is relatively high.

Cell_FACH state (RRC Connected mode): In this state, a low level of user-plane connectivity is possible using small amounts of shared or common radio resources. Associated bearers remain established between the mobile and the plurality of involved network nodes within the connection path. The location of the mobile is known to the cell level but the mobile is able to autonomously control its cell-level mobility (known as cell reselection). A DRX pattern may be employed to assist with power saving. In Release 7 of the Standard, a DRX pattern is introduced in Cell_DCH as part of CPC feature.

Cell_PCH state (RRC Connected mode): In this state, in Release 7 of the Standard for example, whilst the necessary bearers for user-plane communications through the radio access network remain established, no radio resources are available for data transfer. As such, there is no data activity in this state and user-plane communication requires a transition to either cell_FACH or cell_DCH. In cell_PCH, the mobile periodically listens to a paging channel (according to a known DRX cycle) such that it may receive notifications of a need to transition to a more active RRC state whilst saving a lot of power. The location of the mobile is known to cell level, and mobility is autonomously controlled by the mobile.

URA_PCH state (RRC Connected mode): This state is essentially the same as Cell_PCH except that the location of the mobile is known only to a (typically large) group of cells known as a UTRAN Routing Area (URA). Mobility remains autonomously controlled by the mobile. For a mobile UE, significant power savings (on top of those achievable in Cell_PCH) are possible in this state due to the fact that the mobile only needs to inform the network of a location update for each new routing area (rather than performing a cell update procedure to provide a location update each time a new cell is entered).

Idle: In this state, user-plane connectivity is not possible. No resources are assigned to the mobile and a DRX pattern is used in order to conserve power. User-plane connectivity between the radio access network and the core network is not required, hence Uu, Iub and Iu interfaces are not established. The device retains an attachment context with the core network such as to facilitate "always-on" connectivity (i.e. the device is reachable and its IP address is preserved), even when in idle mode. The core network tracks the location of the mobile to routing area level (a routing area is a group of cells). User-plane communication requires (re-)establishment of the Radio Resource Control context and necessary radio and access bearers and a transition to either Cell_FACH or Cell_DCH state.

The present invention is particularly relevant to the UE Cell_DCH state of operation (active RRC connection established) when the UE needs to measure neighbour cells and perform network controlled soft handover procedure in order to maintain its attachment to the core network and to maintain user plane connectivity. The soft handover procedure is based on the properties of the W-CDMA radio coding scheme - it is possible for a UE to simultaneously receive signals from two or more radio base stations (Node-B's) that are transmitting the same single data bit stream. If the signal power from two or more radio base stations is nearly the same, the UE receiver can combine these received signals in such a way that the single data bit stream is decoded much more reliably than if only one base station were transmitting to UE.

The set of cells (one or more) providing the separate signals which are combined into the single data bit stream decoded in UE is called an Active Set, AS of cells/radio links. An AS of radio links is synonymous with AS of cells where the cells are the cells in which the radio links exist. When a UE is mobile and in soft handover mode, during an active call, the Active Set could be modified dynamically (e.g. new cells could be added or removed from it) based on signal measurements of the available cells. In 3GPP UTRAN networks, Radio Resource Control protocol messages are used to maintain and update the radio links contained in the Active Set. In particular the following types of RRC messages between UTRAN and UE are used to maintain the Active Set in the UE:

Measurement Control / Measurement Report messages to configure cell measurements in UE and report them to a network.

Active Set Update message - to dynamically modify - add or remove radio links - from the Active Set, usually based on UE measurements.

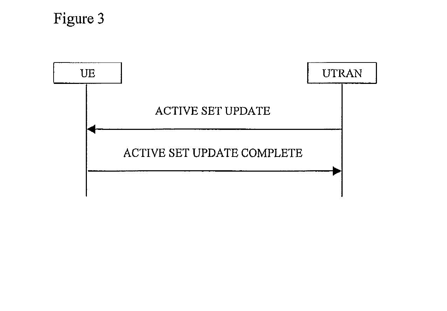

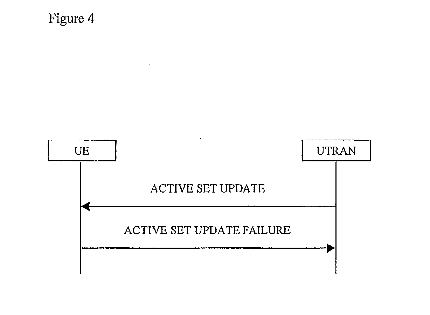

For example, when a UE in Cell_DCH state receives an RRC Active Set Update (AS Update message) message, it should respond to the UTRAN with a success (Active Set Update Complete) message or failure (Active Set Update Failure) message as shown in Figures 3 and 4 as described and shown in the Standard 3GPP TS 25.331 v10.4.0.

In 25.331 Standard, there are a number of reasons for rejecting an Active Set Update message, and sending the Active Set Update Failure message. Some of these are included in TS25.331 section 8.3.4.4, 8.3.4.5, 8.3.4.5b, 8.3.4.8 and 8.3.4.9.

The Active Set Update procedure allows the UTRAN to adjust the Active Set of cells in use by a UE in, for instance, Cell_DCH. This allows the UE to stay in contact with the Radio Access Network as the UE moves and enters coverage of new cells and leaves the coverage of old cells.

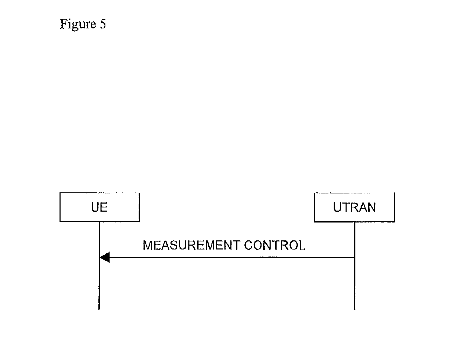

In practice the maintenance of the Active Set relies mostly on RRC measurement reports from the UE. The measurements resulting in measurement reports being sent from the UE are setup and modified by a Measurement Control procedure. The UTRAN may request a measurement by the UE to be setup, modified or released with a MEASUREMENT CONTROL message. The Measurement Control procedure is shown in Figure 5 from 3GPP TS 25.331 v10.4.0.

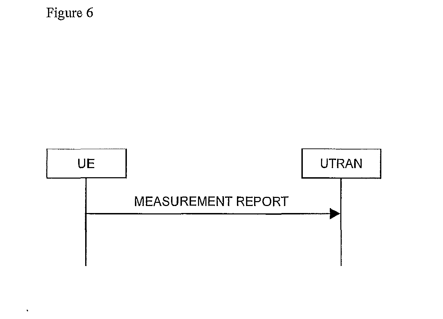

The Measurement Report procedure is shown Figure 6 from 3GPP TS 25.331 v10.4.0.

The purpose of the measurement reporting procedure is to transfer measurement results from the UE to UTRAN.

Based on a measurement configuration provided by a Measurement Control procedure, a UE may be configured to evaluate different types of measurement events. If the UE determines that a measurement event is triggered, it could be reported to the network using a MeAS Measurement Report procedure. According to the Standard, the following types of measurement events are example of events that could be configured, evaluated and triggered in UE:
a) Event 1A - A Primary CPICH enters the reporting range (defined in section 14.1.2.1 of the Standard)
b) Event 1B - A Primary CPICH leaves the reporting range (defined in section 14.1.2.2 of the Standard)
c) Event 1C - A non-active primary CPICH becomes better than an active primary CPICH (defined in section 14.1.2.3 of the Standard)

(where primary CPICH is used to uniquely identify a cell within a PLMN and frequency within a geographical area provided the network has been well planned.)

For example Event 1A is normally configured to allow a UE to report a new cell that could be added to the active set, and the UTRAN normally responds to such a report by adding that cell to the active set by indicating the addition of a new radio link to that cell using an Active Set Update message.

Similarly an Event 1B measurement report normally results in a cell that has become weak being removed from the Active Set by indicating the removal of an existing radio link for that cell via the Active Set Update procedure.

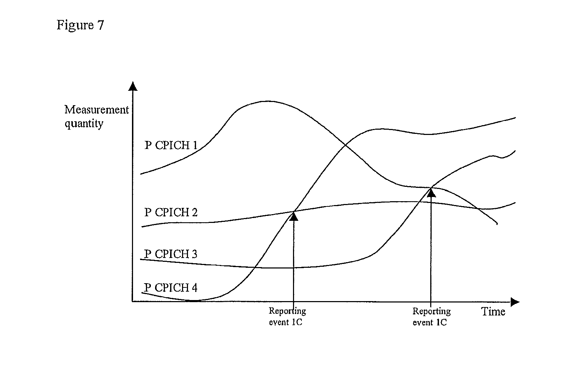

In addition Event 1C is used to indicate a cell that is not currently in the Acive Set is stronger than another cell already in the Active Set. Examples of the event 1C reporting procedure are shown in Figure 7 from 3GPP TS 25.331 v10.4.0. In these examples the cells belonging to primary CPICH for cell 1 (indicated as P CPICH 1) and cell 2 (P CPICH 2) are in the active set, but the cells transmitting primary CPICH for cell 3 and CPICH for cell 4 are not (yet) in the active set.

Sometimes the UTRAN may send an Active Set Update message without an associated measurement report. For example, the UTRAN could determine that the Uplink Radio Link signal in one of the Active Set cells is weak, and decide to remove it from the Active Set. Alternatively a UTRAN may wish to remove an Active Set cell when resources in that cell are scarce, or if the other cells in the Active Set are strong enough such that the additional benefit of this cell is reduced.

In some scenarios, a UE may send a Measurement Report triggered by a configured measurement which may lead to a change in the radio links (or UARFCN+PSC as an identification of the cell) stored in the UE's active set. In response to receiving this Measurement Report the UTRAN may send an Active Set Update message indicating the addition or removal of radio links (RL) in order to establish a new Active Set.

Normally when the UE receives such an Active Set Update message, the new Active Set will be better suited to the current radio conditions than the existing Active Set as it reflects the measurement reported in the transmitted Measurement Report. However, sometimes the existing Active Set will be better, and applying the Active Set Update message would lead to a possible reduction in reception quality. This may be the case for example when, during the time period between sending the Measurement Report and receiving the Active Set Update message, the radio conditions have changed.

### Example 1

In the approach of Example 1, it is recognised that there are two types of Active Set Update messages that remove a cell from an Active Set. The following definitions for type 1 and type 2 distinguish the associated UE and UTRAN behaviours relating to sending or transmitting the Active Set Update message.

**Type 1** is UE initiated. The UE sends a Measurement Report, in this Example, for event 1b, indicating an active set cell is weak. The UTRAN responds with an Active Set Update message.

**Type 2** is UTRAN initiated. Here there is no measurement report associated with the removal of the radio link for a particular cell. The UTRAN chooses a radio link to remove from the Active Set and sends an Active Set Update message to the UE indicating the radio link removal. The reasons for a UTRAN sending a type 2 Active Set Update to remove a radio link could be that it has identified the Uplink Radio Link as very weak, or it is performing load balancing in the UTRAN and trying to take load away from a busy cell. Other reasons may also be possible.

If the Active Set Update is not to be acted upon, the UE may transmit an Active Set Update Failure message. According to the approaches described here, it is recognised that some UTRANs may object to UEs rejecting Type 2 Active Set Update messages leading to increased call drops for example, but accept rejection of Type 1 Active Set Update messages. In response to a UE rejection of a Type 1 Active Set Update message, the UTRAN may maintain the existing Active Set as configured before transmission of the Type 1 Active Set Update message.

In response to, or in spite of, a UE rejecting Type 2 AS UPDATE MESSAGE message, the UTRAN may act as if the AS UPDATE MESSAGE had been accepted by the UE. This results in UE and UTRAN having inconsistent Active Sets. For example, if an Active Set includes radio links from two cells, cell A and cell B, [A, B], then after UE sends Active Set Update Failure in response to UTRAN sending a Type 2 AS UPDATE MESSAGE removing cell B, then UE would still have an Active Set of [A, B] but UTRAN would have an Active Set of [A]. In this case more call drops are likely. One reason for this could be that because the UE has both [A, B] in its Active Set, where B is stronger than A, so the UE will send E1A measurement Reports later than it would do if it had accepted the AS UPDATE MESSAGE deleting B.

For example, consider cell A has RSCP of -90dBm and Cell B has RSCP of -50dBm. Then consider E1A is configured to be sent when a cell has an RSCP above a threshold of -5dB + RSCP of strongest cell in Active Set. Now consider cell C is detected by the UE and has an RSCP rising slowly from -100dBm to - 50dBm. In the case where UE has rejected AS UPDATE MESSAGE, and has an Active Set of [A, B], the E1A trigger threshold is -50 -5 = -55 dBm (based on strongest cell being B).

However in the case where the UE accepted AS UPDATE MESSAGE, then the UE Active Set is [A] and the E1A trigger threshold is -95dBm. So with this Example we can see that cell C will be added much sooner in the case where the original AS UPDATE MESSAGE is accepted. If the cell is added later, as it could be if the UE has a higher E1A trigger due to using the active set [A, B], then there is a higher risk that the cells already in the Active Set will become so weak that the UE will suffer RLF (Radio Link Failure). If an RLF occurs then depending on the settings for T314 and T315 (UE timers defined in section 13.1 of [1] used in Radio Link Failure procedure) this may cause an immediate call drop, or recovery may be attempted. Despite any attempted radio link recovery the occurrence of RLF significantly increases the chances of the call being dropped.

In Example 1, there is selective rejection of Active Set Update messages. By distinguishing between Type 1 AS UPDATE MESSAGE and Type 2 AS UPDATE MESSAGE messages, the benefits from rejecting Type 1 AS UPDATE MESSAGE messages can be obtained without the costs of rejecting Type 2 AS UPDATE MESSAGE messages.

According to this Example, the following is proposed (underlining indicating a change by addition) when the conditions for rejecting an Active Set Update message as specified in TS25.331v10.4.0 sections 8.3.4.4, 8.3.4.5, 8.3.4.5b, 8.3.4.8 and 8.3.4.9 are not satisfied.

Upon reception of an ACTIVE SET Update message the UE shall act upon all received information elements as specified in 8.6, unless specified otherwise in the following.

The UE may:
maintain a list of the set of cells to which the UE has Radio Links if the IE "Cell ID" is present;

keep the active set as it was before the ACTIVE SET Update message was received and transmit an ACTIVE SET UPDATE FAILURE message on the DCCH using AM RLC, if the UE determines that reception quality based on the updated Active Set could be worse than using current Active Set when attempting to remove the RL indicated in the "Radio Link Removal Information".

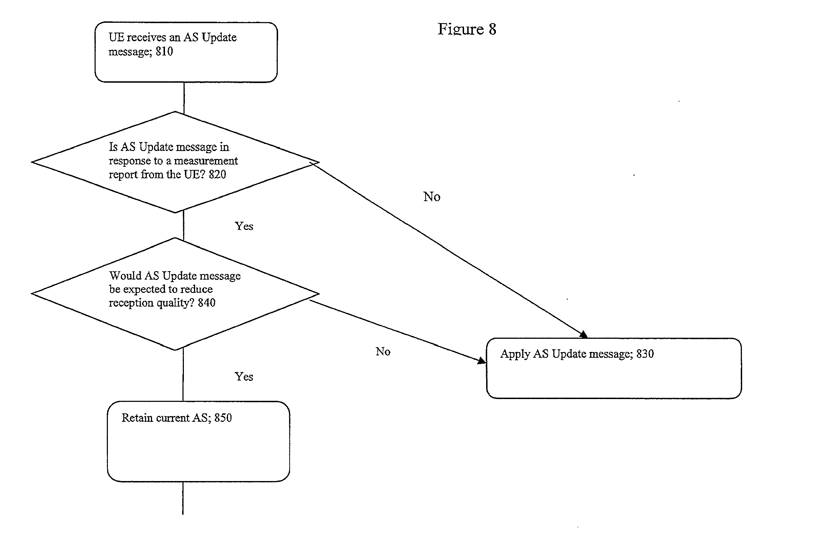

This approach is illustrated in Figure 8. In Figure 8, in 810, a UE having a current AS of cells, receives an AS Update message. At 820, there is a determination of whether the AS Update message is in response to a measurement report sent from the UE. If it is not, then in 830 the AS Update message is applied to the current AS as per the Standard.

If the AS Update message is in response to a UE measurement report, then in 840 there is a further determination of whether if in applying the AS Update message, there would possibly be a significantly reduced reception quality. "Significantly" reduced refers to a reduction that is not relatively insignificant, not *de minimis,* or does not have associated with it no effective detrimental effects, measureable or otherwise. That is, the reduction is expected to be significant as opposed to only a small reduction. A possible reduction is one which is anticipated or expected to occur. That is, there is a check to see if applying the AS UPDATE MESSAGE is high risk. High risk would be, in one example, where a radio link proposed to be removed by the AS Update message is the only acceptable quality radio link in the AS. Thus, applying the AS UPDATE MESSAGE procedure would leave only weak, poor, or low strength radio links in the Active Set.

If it is not determined that there would be a significant reduction in reception quality, then in 830 the UE applies the AS Update message as per the Standard.

If it is the case that there would be a possible (expected) significant reduction in reception quality, then in 850 the current AS is maintained. That is, the AS Update message is not applied. In one aspect, the AS Update message is rejected, and an AS Update failure message sent.

In further detail, according to one aspect of this example, the UE adopts the following approach:

When Measurement Report triggered by event 1B is sent, store this in a variable CellsReportedInE1B and record the radio link for the cell that triggered the Measurement Report.

If the AS Update message is received removing a radio link for a cell, then check to see if the radio link is stored in the variable CellsReportedInE1B (to check that the AS UPDATE MESSAGE is of the type 1 AS UPDATE MESSAGE and is sent in response to the UE detected radio link signal strength change which triggered the event 1B Measurement Report rather than for a type 2 AS UPDATE MESSAGE.)

If the radio link in variable CellsReportedInE1B, then check if applying the AS UPDATE MESSAGE is high risk.

If conditions 2 and 3 are satisfied, then send Active Set Update Failure message, and retain the current active set.

If either condition 2 or condition 3 is not satisfied, then apply the Active Set Update message according to TS25.331v10.4.0 section 8.3.4.3, and send an Active Set Update Complete message to the UTRAN.

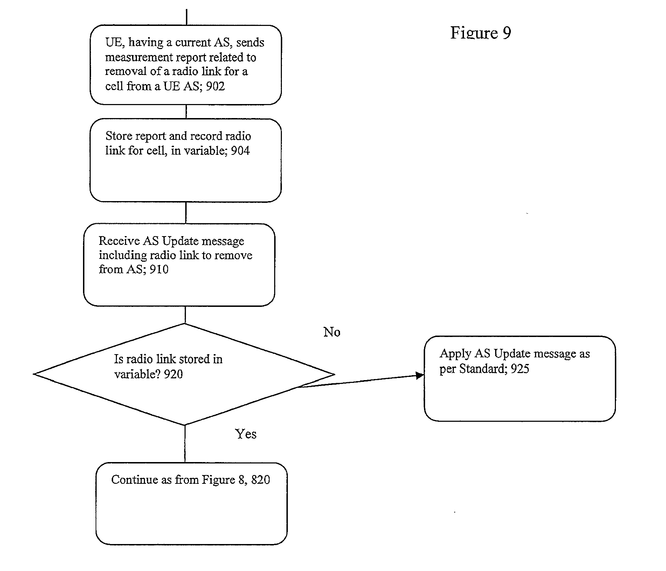

This detailed approach is illustrated in Figure 9, which can be understood in conjunction with Figure 8. 902 and 904 represent point 1 above. In 902, the UE, having a current AS of cells, sends a measurement report. In 904, the report is stored in a variable and the radio link recorded for the cell that triggered the Measurement Report. 910 is related to point 2, in which there is receipt of an AS Update message including a radio link to remove from the current AS. Finally, in 920, there is a determination of whether the AS Update message is in reply to/has been sent responsive to, a measurement report sent from the UE, as in 820 of Figure 8. In this aspect of Example 1, there is a check to see if the radio link is stored in the variable.

If it is, Figure 9 then continues as steps following 820 in Figure 8. If it is not, then in 925; the AS Update message is applied as per the Standard.

In an alternative to all or part of 1 and 2 above, the UE could store cells in AS for which a measurement report E1B have not been sent. Alternatively, all E1B messages are stored, or all measurement report message so that the check of whether an E1B message has been sent for a cell can be made when an AS Update message is received. Optionally, changes to the AS are also stored. In summary, there are various options of storing information so that at a later time, UE can determine whether a cell has been previously reported in an E1B measurement report.

There are various alternatives possible in relation to step 3 to determine whether application of the AS UPDATE MESSAGE is high risk. For example, in one alternative, it is considered high risk to apply if either there are no event 1C measurements currently active and if any radio link being removed by the Active Set Update message doesn't still satisfy the conditions for triggering Event 1B for any configured measurement.

When the radio link for the cell in the variable CellsReportedInE1B is removed from the Active Set, then the entry for the radio link is removed from variable CellsReportedInE1B, in variations applicable to all relevant examples.

The advantages of this approach include reducing the risk that the UE and UTRAN having inconsistent Active Sets, and thus reducing the number of call drops.

In a variation of example 1 (not shown), the UE supports multi-cell operation on two or more cells. For example, in Release 8 of the Standard, of UMTS, dual cell HSDPA operation on adjacent carriers is possible operating in the same frequency band. It includes simultaneous High Speed Downlink Packet Access physical channels transmission on two carriers on different frequencies. In Release 9 of the Standard, a similar scheme was introduced for uplink transmission. Those features have an active set on a second frequency. Later releases have more active sets.

The UE in this variation supports multi-cell operation on two or more cells. This in one aspect includes operation on two or more different frequencies and bands. In one alternative, it includes adj acent frequency or non-adjacent frequency operation. Each cell on those frequencies has its own Active Set defined in downlink or uplink which could be modified using the improved Active Set Update algorithm and procedures described in example 1.

### Example 2

Example 2 can be considered in conjunction with Example 1. It relates to reducing the risk of a UE treating an Active Set Update message as an incorrect type.

This example recognises the possibility that a UE could send Event E1B Measurement Report, and the UTRAN could ignore it, but later send an AS UPDATE MESSAGE to remove the same radio link for the cell reported in the Measurement Report triggered by the event 1B. Alternatively the UTRAN may send the AS UPDATE MESSAGE before it receives the measurement report, but the AS UPDATE MESSAGE is received by the UE after the measurement report was sent. That is the messages cross over during transmission.

To reduce this risk, this example proposes adding a timeout to remove the entry for the radio link for the cell from the variable CellsReportedInE1B, which reduces the risk of the UE treating this subsequent Active Set Update message as a Type 1 AS UPDATE MESSAGE rather than the Type 2 AS UPDATE MESSAGE it actually is.

The length of the timeout timer, for the removal of a radio link from the variable, in one aspect is slightly longer than the expected maximum (excluding extreme outliers) length of time for the UTRAN to respond to the original Measurement Report sent due to the occurrence of event E1B, and sending a Type 1 AS UPDATE MESSAGE. The timer reduces the risk that the UE rejects a Type 2 AS UPDATE MESSAGE message erroneously because it appears to the UE to be a Type 1 AS UPDATE MESSAGE message. Reducing the probability of rejecting a Type 2 AS UPDATE MESSAGE message is advantageous because such a rejection may lead to a call drop.

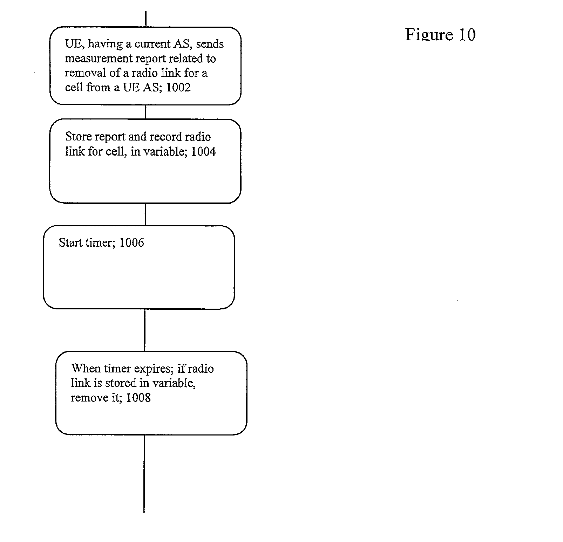

Figure 10 illustrates this example, with a UE having a current AS sending an AS Update measurement report in 1002. In 1004, the UE stores the report and records the radio link for the cell being removed in a variable. In 1006, a timer is started. In 1008, the radio link is removed from the variable, if it is still there, when the timer expires.

### Example 3

Example 3 recognises that future UTRANs may start objecting to UEs sending Active Set Update Failure messages for some of the scenarios or cases in which Example 1 sends such messages. Example 3 can be used in conjunction with Example 1, or Example 1 and 2

To reduce the impact of such a network behaviour change, Example 3 introduces a discovery procedure. When the UMTS radio is switched on, Example 1 is used.

After an Active Set Update Failure is sent, the UE looks for indications of the result of sending that message. If within N seconds (e.g. N=7) of sending the failure message a radio link failure RLF is suffered, or an RRC Connection Release message is received, this can be used as an indication that the UTRAN did not accept the Active Set Update Failure message. If however neither of those events occur within the N seconds, this can be used as an indication that the Active Set Update Failure message was accepted by the UTRAN.

By observing the UTRAN response to the transmission of the Active Set Update Failure message, the UE behaviour could be modified accordingly. For example, for each Active Set Update Failure that the UE identifies as resulting in RLF or RRC Connection Release within N seconds, then the UE could increment a counter. The counter could also be incremented if UE identified that UTRAN removed a cell from the active set even though Active Set Update Failure was sent. If the counter reached a threshold, such as three, then the UE suspends the application of Example 1 until next time radio is switched on, or a specified period of time, e.g. X days. However, each time Active Set Update Failure is sent, and no problem is observed (counter not incremented), if the counter is greater than zero, the counter is decreased until it reaches zero, e.g. by a fixed value such as one, or directly to zero.

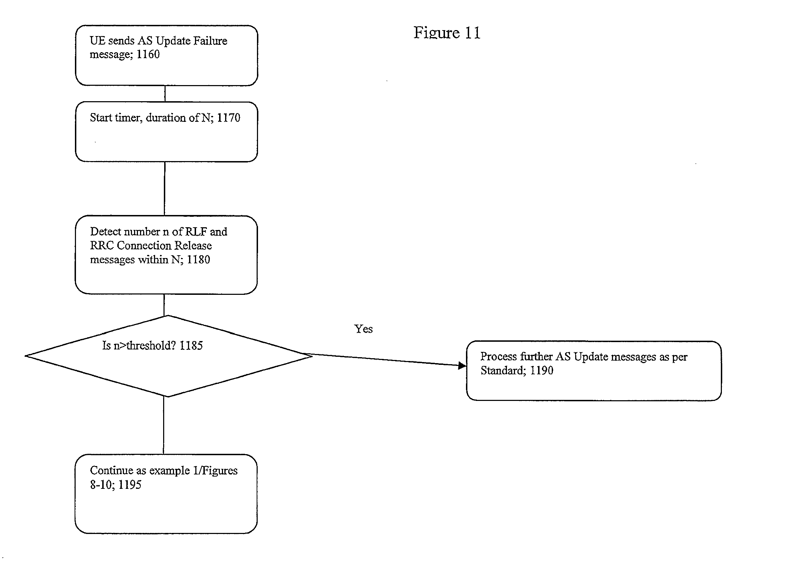

This Example is illustrated in Figure 11. In 1160, the UE sends an AS Update Failure message. In 1170, a timer is started from when the message is sent, and runs for a period of N seconds. In 1180, UE increases a number n if RLF or RRC connection release messages was received before the timer expired.

Optionally if an RRC Connection Release is received within N seconds, further checks in the UE could be done in the UE to determine whether that message was a normal case, or an abnormal termination of the RRC Connection. For example, the state of the CC (Call Control) component in the NAS (Non-Access Stratum) could be used. If normal CC signalling has taken place at the end of a voice call, the CC would be in a different state compared to RRRC Connection RELEASE being sent in the middle of a voice call.

There is a determination in 1185 of whether the number n is greater than a threshold. If it is, then in 1190, future AS Update messages are processed as per the Standard. If n is less than the threshold, then in 1195 the handling of AS Update message continues as per Example 1 and/or 2 and/or 3, as shown in Figures 8-10.

A benefit of this approach is that if allows flexibility in case UTRAN behaviour is changed, so that any degradation of UE performance due to Example 1 and optionally 2 can be reduced compared to UEs implementing Example 1 and optionally 2 without Example 3.

In a variation, as an alternative or in addition to Example 3, not shown, the UE attempts to identify if the UTRAN treats the Active Set Update Failure message no differently to if it had been an Active Set Update Complete message. In particular, UE tries to determine if a cell that AS UPDATE MESSAGE was trying to remove from the Active Set, has been removed by UTRAN even though the AS UPDATE MESSAGE was rejected. The UE can look to evidence that this has been done including UTRAN trying to add the cell back again (this should not be done if UTRAN had kept the cell in the Active Set).

Other evidence may be a reception of a Measurement Control message changing UE variable containing meAS Update message cells information (CELL_INFO_LIST variable defined in section 13.4.0 of the Standard), as this is normally only done when Active Set (in UTRAN) has changed. More direct evidence could be from a physical layer (L1) where L1 could detect that transmission from the removed cell has stopped, or the channel is used for another UE and so the data from that cell no longer matches the data from other cells (which it should, to allow soft combining). Other evidence may be UTRAN ignoring an E1B Measurement Report for a weak cell (which it would likely do if E1B is reported for a cell not in UTRAN's Active Set).

### Example 4

Example 4 relates to the use of signaling between the network and the UE. In this example, the network (such as the UTRAN) indicates whether or not the UE is allowed to reject (e.g. based on reception quality criteria) an AS Update message), and signals this preference to the UE.

In one aspect, the network transmits an indication to the UE to indicate whether the UE is allowed to not accept an AS Update message based on reception quality criteria being met, or not.

The indication in one aspect (not shown) specifies whether the allowance to reject applies to all or only some AS Update messages (for example to only Type 1, only Type 2 or to both message types). The network in one aspect signals this in the AS Update message itself by adding an Information Element (IE) to that message, or to other signaling messages.

The information element can for instance be one or the following:
**a) IE rejectionAllowed**

When this IE is present, then the UE is allowed to decide whether the existing Active Set or the proposed active set (within an AS Update message) is better, and choose to reject or accept the AS Update message based on quality criteria as described in relation to example 1. However, if the IE is absent, then the UE is required to accept the message even if the proposed active set is worse than the current one.

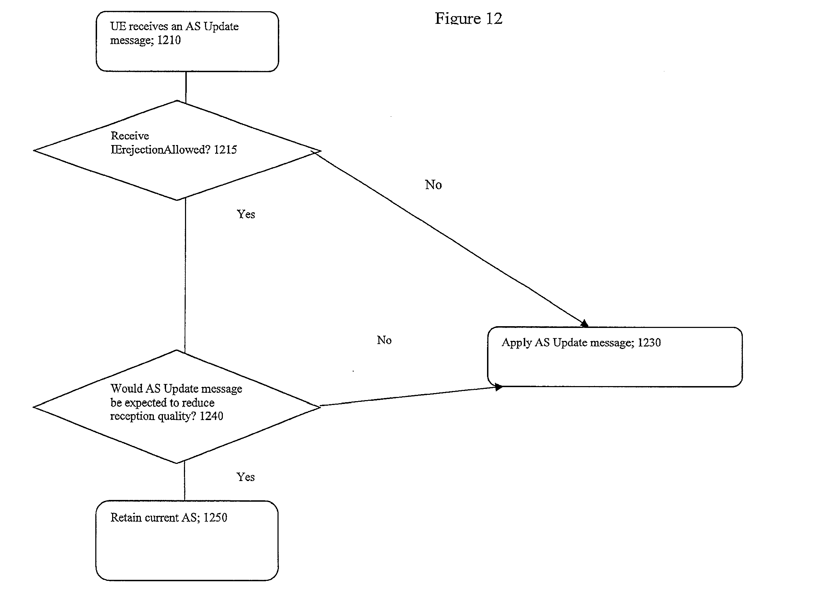

This is illustrated in Figure 12 in which it is assumed that there is no indication in the IE relating to the applicability of the IE dependent upon AS Update message type, or that criteria in relation to this indication are fulfilled.

In 1210, the UE receives an AS Update message. In 1215, there is a determination of whether there has been receipt of the IE rejection Allowed. If yes, then in 1240, it is determined if the AS Update message would be expected to reduce reception quality. If the IE has not been received, then in 1230, the UE applies the AS Update message.

Returning to 1240, if the AS update message would not be expected to reduce reception quality, then in 1230, the UE applies the AS Update message. If, as in 1250, reception quality reduction is expected, then the current AS is retained.
**b) Boolean IE rejection Allowed**

In another signaling variation, a boolean value of the rejection Allowed IE is used. If TRUE the UE is allowed to reject the ASU if the proposed Active Set is not desirable (e.g. if it would result in degraded reception quality) If FALSE, then the UE algorithm is not allowed to reject the Active Set Update message based on reception quality criteria.

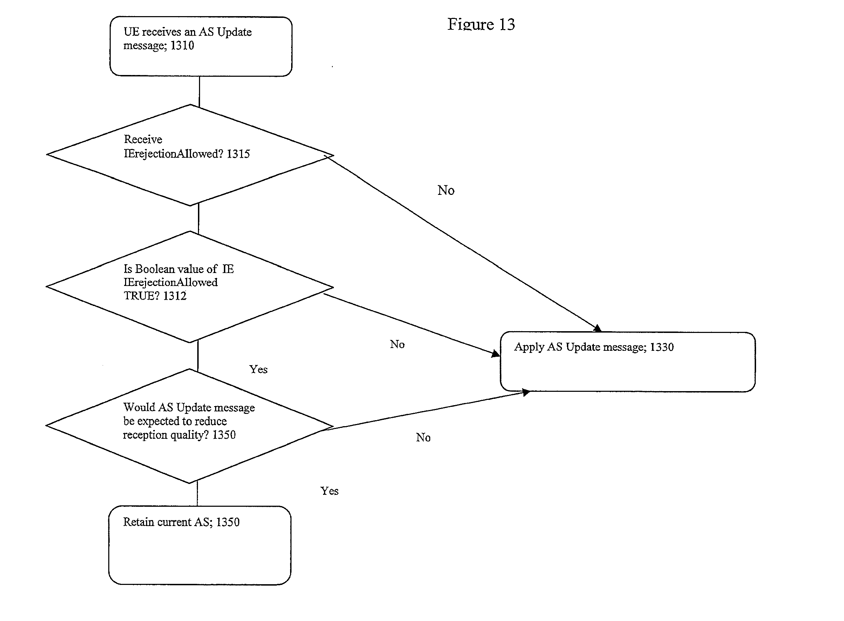

This is illustrated in Figure 13 in which it is assumed that there is no indication in the IE relating to the applicability of the IE dependent upon AS Update message type, or that criteria in relation to this indication are fulfilled.

In 1310, the UE receives an AS Update message. In 1315, there is a determination of whether there has been receipt of the IE rejection Allowed.

In 1312, there is then an assessment of a Boolean value of the rejection Allowed IE. If TRUE, then the method moves to step 1340. If FASLE, then in step 1330, the UE applies the AS Update message.

In 1340, it is determined if the AS Update message would be expected to reduce reception quality. If the IE has not been received, then in 1330, the UE applies the AS Update message.

Returning to 1340, if the AS update message would not be expected to reduce reception quality, then in 1330, the UE applies the AS Update message. If, as in 1350, reception quality reduction is expected, then the current AS is retained.
**c) New IE rejectionProhibited**

Alternatively, if this IE is absent, the UE is allowed to reject an AS Update message (e.g. on the basis of reception quality criteria) and if the IE is present, such a rejection is not allowed.

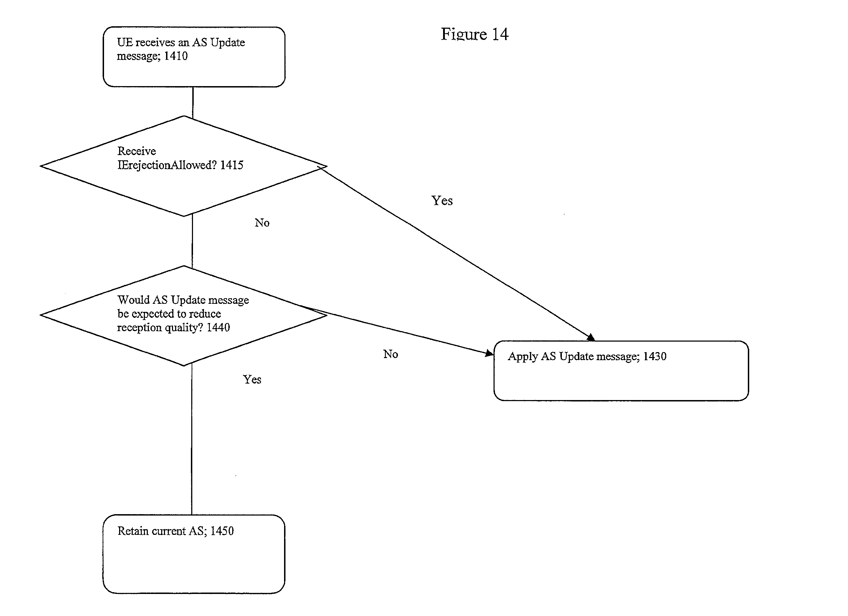

This is illustrated in Figure 14 in which it is assumed that there is no indication in the IE relating to the applicability of the IE dependent upon AS Update message type, or that criteria in relation to this indication are fulfilled.

In 1410, the UE receives an AS Update message. In 1415, there is a determination of whether there has been receipt of the IE rejectionProhibited. If no, then in 1440, it is determined if the AS Update message would be expected to reduce reception quality. If the IE has been received, then in 1430, the UE applies the AS Update message.

Returning to 1440, if the AS update message would not be expected to reduce reception quality, then in 1430, the UE applies the AS Update message. If, as in 1450, reception quality reduction is expected, then the current AS is retained.

### Example 5

Example 5 can be used in conjunction with any one or more of examples 1-4. In example 5, when the UE chooses to reject an Active Set Update message (e.g. due to its estimation that the quality of the current Active Set is better than the proposed one), the UE indicates the reason for the rejection within a failure cause sent to the network, with in one example, this being within the Active Set Update Failure message.. The failure cause indication enables the network to thereby distinguish between rejections that are related to possible reception quality degradation and rejections related to other causes. The cause may be sent within an IE "Failure Cause" that is sent within the Active Set Update Failure message. The IE "failure cause" could be set to an existing cause such as "Physical Channel Failure" or alternatively a new cause could be added such as for example "Current Config Preferred".

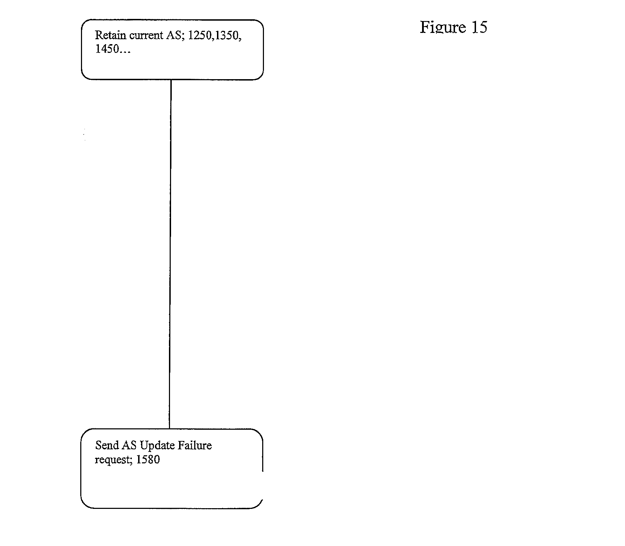

Figure 15 illustrates this example, where 1250, 1350, 1450 are examples of where the UE does not accept the AS Update message. In 1580, the UE then sends an AS Update Failure message including the IE "Failure cause".

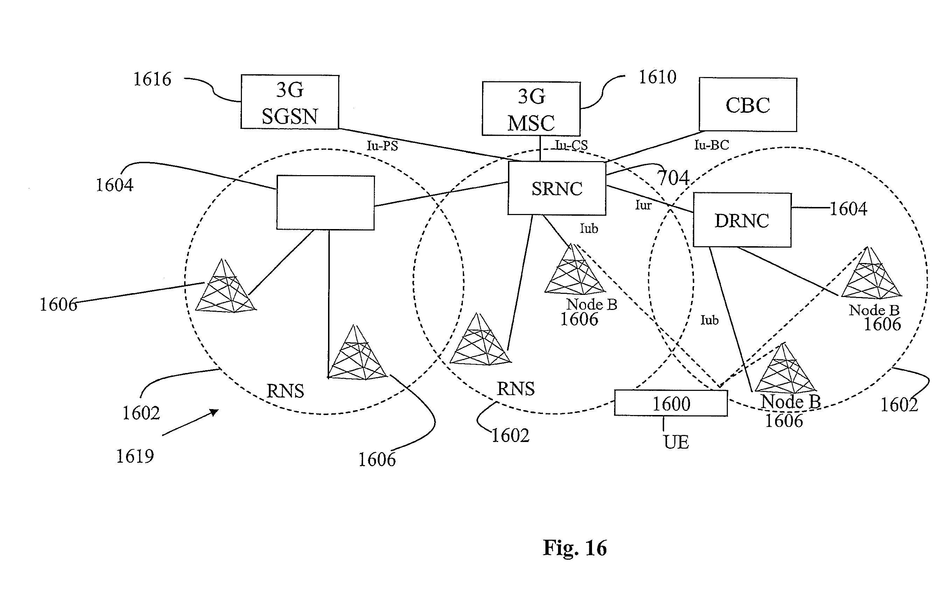

Figure 16 shows an overview of a network and a UE device. Clearly in practice there may be many UE devices operating with the network but, for the sake of simplicity, Figure 16 only shows a single UE device 1600. For the purposes of illustration, Figure 16 also shows a network 1619 having a few components. It will be clear to a person skilled in the art that in practice a network will include far more components than those shown.

Figure 16 shows an overview of the radio access network 1219 (UTRAN) used in a UMTS system. The network 1619 as shown in Figure 16 comprises three Radio Network Subsystems (RNS) 2. Each RNS has a Radio Network Controller (RNC) 4. Each RNS 2 has one or more Node B 6 which are similar in function to a Base Transmitter Station of a GSM radio access network. User Equipment UE 1600 may be mobile within the radio access network. Radio connections (indicated by the straight dotted lines in Figure 16) are established between the UE and one or more of the Node Bs in the UTRAN.

The radio network controller controls the use and reliability of the radio resources within the RNS 1602. Each RNC may also connected to a 3G mobile switching centre 1610 (3G MSC) and a 3G serving GPRS support node 1612 (3G SGSN).

An RNC 1604 controls one or more Node B's. An RNC plus its Node B's together make up an RNS 1602. A Node B controls one or more cells. Each cell is uniquely identified by a frequency and a primary scrambling code (primary CPICH in FDD, primary CCPCH in TDD).

Generally in UMTS a cell refers to a radio network object that can be uniquely identified by a UE from a cell identifier that is broadcast over geographical areas from a UTRAN access point. A UTRAN access point is a conceptual point within the UTRAN performing radio transmission and reception. A UTRAN access point is associated with one specific cell i.e., there exists one UTRAN access point for each cell. It is the UTRAN-side end point of a radio link. A single physical Node B 1606 may operate as more than one cell since it may operate at multiple frequencies and/or with multiple scrambling codes.

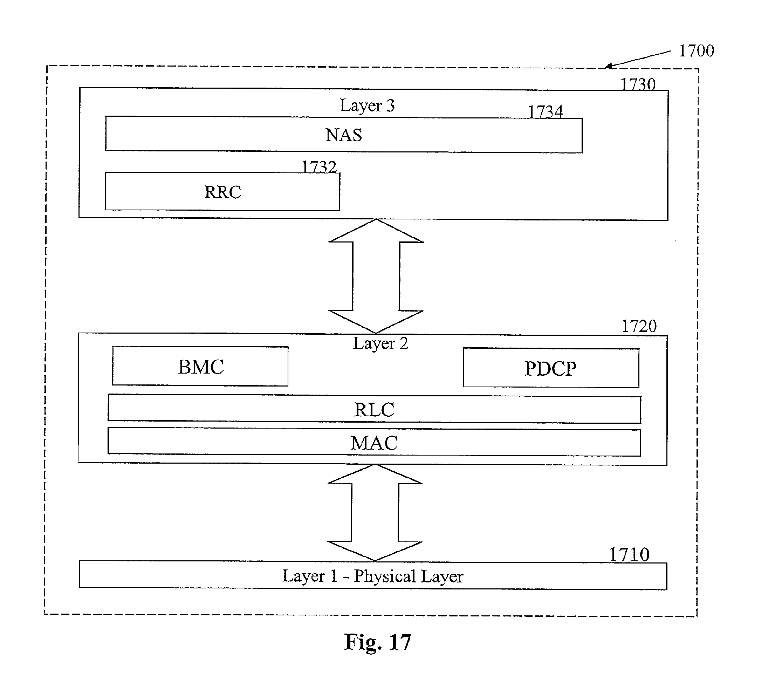

Figure 17 is a block diagram illustrating an embodiment of a protocol stack provided in a UE. A Radio Resource Controller (RRC) block 1732 is a sub layer of Layer 3 1730 of a UMTS protocol stack 1700. The RRC 1732 exists in the control plane only and provides an information transfer service to the non-access stratum NAS 1734. The RRC 1732 is responsible for controlling the configuration of radio interface Layer 1 1710 and Layer 2 1720. When the UTRAN wishes to change the UE configuration it will issue a message to the UE containing a command to invoke a specific RRC procedure. The RRC layer 1732 of the UE decodes this message and initiates the appropriate RRC procedure. Generally when the procedure has been completed (either successfully or not) then the RRC sends a response message to the UTRAN (via the lower layers) informing the UTRAN of the outcome. It should be noted that there are a few scenarios where the RRC will not issue a response message to the UTRAN and, in those cases the RRC need not and does not reply.

The strategies for a method and apparatus for wireless communication as discussed above with reference to the drawings may be implemented by the RRC block 1732.

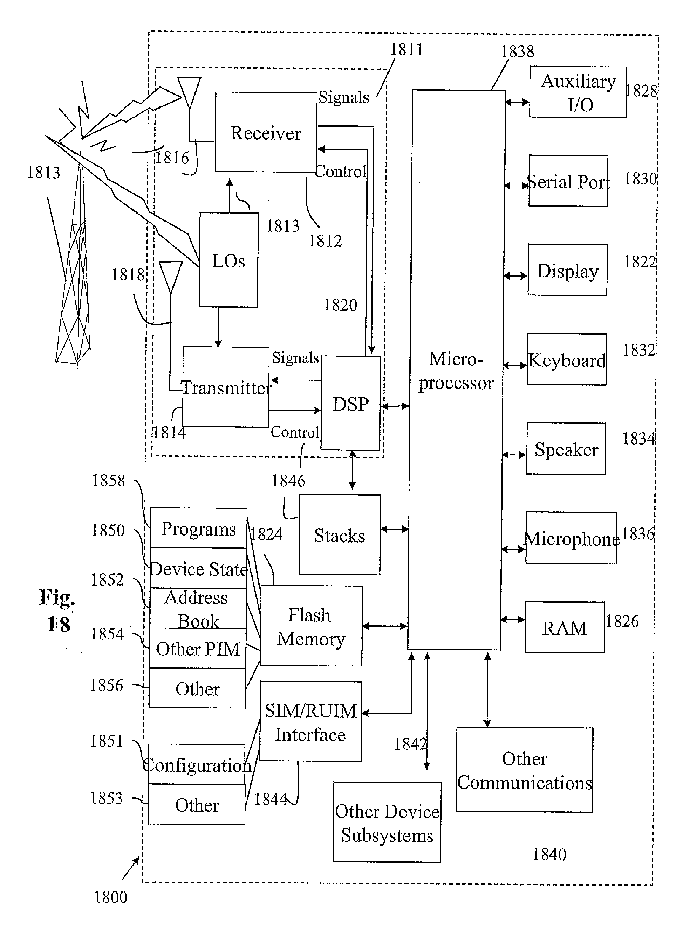

Turning now to Figure 18, Figure 18 is a block diagram illustrating a mobile device, which can act as a UE and co-operate with the apparatus and methods of Figures 1 to 15, and which is an exemplary wireless communication device. Mobile station 1800 is preferably a two-way wireless communication device having at least voice and data communication capabilities. Mobile station 1800 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as Examples.

Where mobile station 1800 is enabled for two-way communication, it will incorporate a communication subsystem 1811, including both a receiver 1812 and a transmitter 1814, as well as associated components such as one or more, preferably embedded or internal, antenna elements 1816 and 1818, local oscillators (LOs) 1813, and processing means such as a processing module such as a digital signal processor (DSP)1820. As will be apparent to those skilled in the field of communications, the particular design of the communication subsystem 1811 will be dependent upon the communication network in which the device is intended to operate. For example, mobile station 1800 may include a communication subsystem 1411 designed to operate within the Mobitex™ mobile communication system, the DataTAC™ mobile communication system, GPRS network, UMTS network, EDGE network or LTE network.

Network access requirements will also vary depending upon the type of network 1802. For example, in the Mobitex and DataTAC networks, mobile station 1800 is registered on the network using a unique identification number associated with each mobile station. In LTE, UMTS and GPRS networks, however, network access is associated with a subscriber or user of mobile station 1800. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "1811" emergency calling, may be available, but mobile station 1800 will be unable to carry out any other functions involving communications over the network 1802. The SIM interface 1844 is normally similar to a card-slot into which a SIM card can be inserted and ejected like a diskette or PCMCIA card. The SIM card can have approximately 64K of memory and hold many key configuration 1851, and other information 1853 such as identification, and subscriber related information.

When required network registration or activation procedures have been completed, mobile station 1800 may send and receive communication signals over the network 1802. Signals received by antenna 1416 through communication network 1802 are input to receiver 1812, which may perform such common receiver functions as signal amplification, frequency down conversion, filtering, channel selection and the like, and in the Example system shown in Figure 14, analog to digital (A/D) conversion. A/D conversion of a received signal allows more complex communication functions such as demodulation and decoding to be performed in the DSP 1820. In a similar manner, signals to be transmitted are processed, including modulation and encoding for example, by DSP 1820 and input to transmitter 1814 for digital to analog conversion, frequency up conversion, filtering, amplification and transmission over the communication network 1802 via antenna 1818. DSP 1820 not only processes communication signals, but also provides for receiver and transmitter control. For example, the gains applied to communication signals in receiver 1812 and transmitter 1814 may be adaptively controlled through automatic gain control algorithms implemented in DSP 1820.

Mobile station 1800 preferably includes processing means such as a microprocessor 1838 which controls the overall operation of the device. Communication functions, including at least data and voice communications, are performed through communication subsystem 1811. Microprocessor 1838 also interacts with further device subsystems such as the display 1822, flash memory 1824, random access memory (RAM) 1826, auxiliary input/output (I/O) subsystems 1828, serial port 1830, keyboard 1832, speaker 1834, microphone 1836, a short-range communications subsystem 1840 and any other device subsystems generally designated as 1842.

Some of the subsystems shown in Figure 18 perform communication-related functions, whereas other subsystems may provide "resident" or on-device functions. Notably, some subsystems, such as keyboard 1832 and display 1822, for example, may be used for both communication-related functions, such as entering a text message for transmission over a communication network, and device-resident functions such as a calculator or task list.

Operating system software used by the microprocessor 1838 is preferably stored in a persistent store such as flash memory 1824, which may instead be a read-only memory (ROM) or similar storage element (not shown). Those skilled in the art will appreciate that the operating system, specific device applications, or parts thereof, may be temporarily loaded into a volatile memory such as RAM 1826. Received communication signals may also be stored in RAM 1826.

As shown, flash memory 1824 can be segregated into different areas for both computer programs 1858 and program data storage 1850, 1852, 1854 and 1856. These different storage types indicate that each program can allocate a portion of flash memory 1824 for their own data storage requirements. Microprocessor 1838, in addition to its operating system functions, preferably enables execution of software applications on the mobile station. A predetermined set of applications that control basic operations, including at least data and voice communication applications for example, will normally be installed on mobile station 1800 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 1802. In a preferred embodiment, the PIM data items are seamlessly integrated, synchronized and updated, via the wireless network 1802, with the mobile station user's corresponding data items stored or associated with a host computer system.

Further applications may also be loaded onto the mobile station 1400 through the network 1802, an auxiliary I/O subsystem 1828, serial port 1830, short-range communications subsystem 1840 or any other suitable subsystem 1842, and installed by a user in the RAM 1826 or preferably a non-volatile store (not shown) for execution by the microprocessor 1838. Such flexibility in application installation increases the functionality of the device and may provide enhanced on-device functions, communication-related functions, or both. For example, secure communication applications may enable electronic commerce functions and other such financial transactions to be performed using the mobile station 1800.

In a data communication mode, a received signal such as a text message or web page download will be processed by the communication subsystem 1811 and input to the microprocessor 1838, which preferably further processes the received signal for output to the display 1822, or alternatively to an auxiliary I/O device 1828. A user of mobile station 1800 may also compose data items such as email messages for example, using the keyboard 1832, which is preferably a complete alphanumeric keyboard or telephone-type keypad, in conjunction with the display 1822 and possibly an auxiliary I/O device 1828. Such composed items may then be transmitted over a communication network through the communication subsystem 1811.

For voice communications, overall operation of mobile station 1400 is similar, except that received signals would preferably be output to a speaker 1434 and signals for transmission would be generated by a microphone 1836. Alternative voice or audio I/O subsystems, such as a voice message recording subsystem, may also be implemented on mobile station 1800. Although voice or audio signal output is preferably accomplished primarily through the speaker 1834, display 1822 may also be used to provide an indication of the identity of a calling party, the duration of a voice call, or other voice call related information for example.

Serial port 1830 in Figure 18, would normally be implemented in a personal digital assistant (PDA)-type mobile station for which synchronization with a user's desktop computer (not shown) may be desirable, but is an optional device component. Such a port 1830 would enable a user to set preferences through an external device or software application and would extend the capabilities of mobile station 1800 by providing for information or software downloads to mobile station 1800 other than through a wireless communication network. The alternate download path may for example be used to load an encryption key onto the device through a direct and thus reliable and trusted connection to thereby enable secure device communication.

Other communications subsystems 1840, such as a short-range communications subsystem, is a further optional component which may provide for communication between mobile station 1800 and different systems or devices, which need not necessarily be similar devices. For example, the subsystem 1840 may include an infrared device and associated circuits and components or a Bluetooth™ communication module to provide for communication with similarly enabled systems and devices.

When mobile device 1800 is used as a UE, protocol stacks 1446 include a method and apparatus for wireless communication.

### EXTENSIONS AND ALTERNATIVES

In the foregoing specification, concepts have been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being curried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

In one example there is provided an apparatus, and a method of wireless communication for a device the method comprising, at the device: receiving an AS Update message, and if the message is received in response to a message from the device, and upon a possible reduction in reception quality if the AS Update message were applied by the device; not applying the AS Update message.

Embodiments have been described herein in relation to 3GPP specifications. However the method and apparatus described are not intended to be limited to the specifications or the versions thereof referred to herein but may be applicable to future versions or other specifications.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

**1.** A method of wireless communication for a device, the method comprising, at the device:
receiving an AS Update message, and
if the message is received in response to a message from the device, and upon a possible reduction in reception quality if the AS Update message were applied by the device;
not applying the AS Update message.

**2.** The method as claimed in claim 1, wherein a possible reduction comprises an anticipated or expected reduction in reception quality.

**3.** The method as claimed in claim 1 or claim 2, in which not applying the AS Update message comprises:
not applying the AS Update message to an AS of cells for the device for a predetermined period of time after receipt of the AS Update message;
rejecting the AS Update message;
or rejecting the AS Update message and sending an AS Update Failure Message.4.
The method as claimed in and one of claims 1-3, further including
sending a measurement report message responsive to a first cell in an AS for the device becoming weak relative to other cells in the AS;
storing an indication of the measurement report message in a first variable;
and
determining the AS Update message is received in response to a message from the device if the indication is stored.

**5.** The method as claimed in claim 4, in which
the indication comprises an identification of a radio link or an identification of the cell for the first cell.

**6.** The method as claimed in claim 4 or claim 5, further including responsive to a radio link for a cell being removed from the AS, removing the indication from the first variable.

**7.** The method as claimed in any one of claims 4 to 6, further including removing the indication from the first variable a predetermined time after storage in the variable.

**8.** The method as claimed in any one of the previous claims, in which a possible reduction in reception quality is dependent upon there being:
no current measurements by the device relating to a cell not in an AS of the device becoming better quality relative to a cell in the AS; and
the AS Update message comprising a radio link to remove from the AS,
where the device previously sent a message related to the removal of that radio link and measurements of that radio link after receipt of the Active Set Update message do not satisfy conditions that would give rise to the device sending a message related to the radio link removal.

**9.** The method as claimed in any one of the previous claims, further including sending an AS Update Failure Message to a network comprising a Universal Mobile Telecommunications System UMTS Terrestrial Radio Access Network UTRAN in which the device is operable.

**10.** The method as claimed in claim 9, in which:
not applying the AS Update message comprises sending an AS Update Failure Message to the UTRAN; and further including
monitoring the UTRAN's response to the AS Update Failure Message comprising monitoring whether there is a radio link failure RLF for the device and/or whether an RRC Connection Release Message is received.

**11.** The method as claimed in claim 10, in which responsive to a number of RLFs and/or RRC Connection Release Messages exceeding a threshold within a predetermined period of time after sending of the AS Update Failure Message:
updating an AS for the device responsive to a subsequently received AS Update message.

**12.** The method as claimed in any one of claims 9-11, further including monitoring the UTRAN's response to the AS Update Failure Message comprising determining whether the UTRAN updates a UTRAN AS.

**13.** The method as claimed in any one of the previous claims, in which the device is associated with operation on a plurality of cells; and preferably wherein the operation is on a plurality of different frequencies; and preferably where there is an active set for each cell on each of said frequencies for downlink, and/or in uplink transmission.

**14.** A method as claimed in any one of the previous claims, when not applying the AS Update message, further comprising
sending a message including an indication indicating a cause for not applying the AS Update message.

**15.** A method of wireless communication for a device, the method comprising, at the device:
receiving an AS Update message, and
depending upon whether the message includes an indication relating to whether to apply or not apply the AS Update message dependent upon reception quality, and whether when an AS-type indication is included, the message fulfils a criteria defined by the indication; and upon a possible reduction in reception quality if the AS Update message were applied by the device;
not applying the AS Update message.

**16.** The method of claim 15, in which the indication comprises an information element included in the AS Update message; and preferably wherein the criteria relates to whether the message is received in response to a message from the device.

**17.** A wireless telecommunications device comprising a component configured to:
receive an AS Update message, and
if the message is received in response to a message from the device, and upon a possible reduction in reception quality if the AS Update message were applied by the device;
not apply the AS Update message.

**18.** A wireless telecommunications device comprising a component configured to:
receive an AS Update message, and
depending upon whether the message includes an indication relating to whether to apply or not apply the AS Update message dependent upon reception quality, and whether when an AS-type indication is included the message fulfils a criteria defined by the indication; and upon a possible reduction in reception quality if the AS Update message were applied by the device;
not applying the AS Update message.

**19.** The device as claimed in claim 17 or 18, comprising a component further configured to carry out the method of any one of claims 1-14.

**20.** A data carrier carrying data comprising instructions executable by processing means to cause those means to carry out a method according to any one of claims 1-14.

**21.** A computer readable medium having computer executable instructions adapted to cause the device to perform a method of any of claims 1-14.
